# EUROPÄISCHE PATENTSCHRIFT

(11) **EP 1 340 000 B1**
(45) Veröffentlichungstag und Bekanntmachung des Hinweises auf die Patenterteilung: **08.06.2005**
(21) Anmeldenummer: 01985361.3
(22) Anmeldetag: 05.12.2001
(51) Int. Cl.: F16D 65/12

(54) **VERFAHREN ZUM HERSTELLEN EINER BREMSSCHEIBE UND KERNFORMWERKZEUG**
METHOD FOR PRODUCING A BRAKE DISK AND A CORE FORMING TOOL
PROCEDE DE PRODUCTION D'UN FREIN A DISQUE, ET OUTIL DE MOULAGE DE NOYAUX

(30) Priorität: 05.12.2000 DE 10060262
(43) Veröffentlichungstag der Anmeldung: 03.09.2003
(73) Patentinhaber: Fritz Winter Eisengiesserei GmbH & Co. KG, 35260 Stadtallendorf (DE)
(72) Erfinder: DEBUS, Björn, 35274 Kirchhain (DE); BECKER, Reiner, 35466 Rabenau (DE)
(74) Vertreter: COHAUSZ & FLORACK
(86) Internationale Anmeldenummer: PCT/EP2001/014218
(87) Internationale Veröffentlichungsnummer: WO 2002/046638

(56) Entgegenhaltungen:
- EP-A- 0 077 137
- EP-A- 0 143 264
- DE-A- 19 931 140

## Beschreibung

Die Erfindung betrifft ein Verfahren zum Herstellen einer ein Trägerteil und einen Reibring aufweisenden Bremsscheibe sowie ein Kernformwerkzeug, welches im Zuge der Herstellung einer solchen Bremsscheibe eingesetzt wird. Bei Bremsscheiben der in Rede stehenden Art dient das Trägerteil zum einen als Befestigung für den Reibring. Zum anderen wird an dem Trägerteil die Radnabe eines Fahrzeugrades befestigt. Zu diesem Zweck kann das Trägerteil zum einen topfförmig ausgebildet sein, so daß auf seiner Stirnseite die Nabe des Rades direkt befestigt und die Bremscheibe auf ein Lager an der Fahrzeugachse aufgeschoben werden kann. Zum anderen kann das Trägerteil auch selbst die Nabe bilden, in der das jeweilige Radlager angeordnet ist. In diesem Fall wird das Rad des Fahrzeugs in der Regel über einen Zwischenflansch mit dem Trägerteil verbunden.

Bremsscheiben werden im praktischen Einsatz hohen mechanischen und thermischen Belastungen unterworfen. Dies gilt insbesondere dann, wenn schwere Nutzfahrzeuge aus höheren Geschwindigkeiten abgebremst werden müssen. Dabei wird die anfangs dem Fahrzeug eigene kinetische Energie zum weitaus überwiegenden Teil in Wärme umgewandelt, welche über die Bremsscheibe abgeführt wird. Gerade bei Nutzfahrzeugen besteht dabei das Problem, daß es aufgrund einer übermäßigen Erwärmung des Reibrings zu Spannungsrissen kommen kann.

Es ist vorgeschlagen worden, der Gefahr der Entstehung von Spannungsrissen in Folge übermäßiger Erwärmung durch den Einsatz von Bremsscheiben entgegenzuwirken, bei denen zwischen dem Trägerteil und dem Reibring nur eine formschlüssige Verbindung besteht. Auf diese Weise wird erreicht, daß sich die Scheibe bei Erwärmung in radialer Richtung im wesentlichen ungehindert ausdehnt. Auf diese Weise kann einerseits die Bildung von Spannungsrissen wirkungsvoll verhindert werden. Andererseits wird der Wärmeübergang vom Reibring auf das Trägerteil und, damit einhergehend, auf das Radlager erschwert, so daß auch dessen thermische Belastung vermindert ist. Problematisch ist jedoch die Herstellung von derartigen Bremscheiben.

Aus der DE 199 31 140 A1 ist ein Verfahren zum Herstellen einer aus einem gegossenen Reibring und einem gegossenen Topf bestehenden Bremsscheibe bekannt. Bei diesem bekannten Verfahren wird der Topf in einen zuvor gegossenen Reibring eingegossen, in dessen innenliegende Umfangsflächen taschenartige Ausnehmungen eingeformt sind. Der Werkstoff des Topfes dringt in diese Taschen ein und füllt sie aus, so daß ein sicherer Formschluß zwischen dem Topf und dem Reibring gewährleistet ist. Ein weiteres Beispiel für das Eingießen eines Topfes in einen vorgefertigten Reibring ist in der EP 0 933 551 A1 gegeben.

Eine andere Möglichkeit der Herstellung von Bremscheiben mit durch einen Gießvorgang formschlüssig miteinander verbundenen Trägerteil und Reibring ist aus der DE 39 20 418 A1 bekannt. Gemäß diesem bekannten Verfahren wird zunächst ein Trägerteil gefertigt, welches an seinem einen Ende einen kranzartig umlaufenden Steg aufweist. In die Umfangsflächen des Steges sind Vertiefungen eingeformt, in welche beim anschließenden Gießen des Reibrings der Gießwerkstoff des Rings eindringt. Auf diese Weise kann ebenfalls eine sichere formschlüssige Verbindung zwischen dem Reibring und dem Trägerelement der Bremsscheibe geschaffen werden.

Gemeinsam ist den voranstehend erläuterten bekannten Vorgehensweisen bei der Herstellung von Bremsscheiben mit in unterschiedlichen Verfahrensschritten gegossenen Trägerteil und Reibring, daß der Werkstoff des jeweils angegossenen Elements in Ausnehmungen des jeweils anderen Elements fließt. Auf diese Weise kann der Formschluß zwischen Reibring und Trägerteil zwar auf einfache und sichere Weise erzeugt werden. Es ist jedoch schwierig, die Form der für die formschlüssige Verbindung erforderlichen Vorsprünge hinsichtlich der an sie gestellten Anforderungen zu optimieren.

Die Aufgabe der Erfindung besteht darin, ausgehend von dem voranstehend erläuterten Stand der Technik ein Verfahren zum Herstellen von Bremsscheiben zu schaffen, mit dem sich hinsichtlich ihrer Funktion weiter optimierte Bremsscheiben mit zu unterschiedlichen Zeiten gegossenen Trägerteil und Reibring herstellen lassen. Zudem soll ein Kernformwerkzeug angegeben werden, welches sich in besonderer Weise für die Durchführung des erfindungsgemäßen Verfahrens eignet.

Diese Aufgabe wird gemäß einer ersten Variante der Erfindung durch ein Verfahren zum Herstellen einer ein Trägerteil und einen Reibring aufweisenden Bremsscheibe gelöst, welches die folgenden Arbeitsschritte umfaßt:
- Erzeugen des Trägerteils mit mindestens einem auf seinem Umfang angeordneten, radial abstehenden Vorsprung,
- Anformen eines den Vorsprung über einen dem Trägerteil zugeordneten Fußabschnitt umschließenden, aus Kernsand gebildeten Gießkerns an das Trägerteil unter Abdichtung eines freien Endabschnitts des Vorsprungs derart, daß dieser Endabschnitt nicht vom Sand des Gießkerns benetzt wird,
- Angießen des Reibrings an das mit dem Gießkern versehenen Trägerteil unter Umgießen des freien Endabschnitts des Vorsprungs.

Eine alternative Lösung der voranstehend angegebenen Aufgabe besteht in einem Verfahren zum Herstellen einer ein Trägerteil und einen Reibring aufweisenden Bremsscheibe, welches die folgenden Arbeitsschritte umfaßt:
- Erzeugen des Reibrings mit mindestens einem auf seiner Innenfläche angeordneten, radial vorstehenden Vorsprung,
- Anformen eines den Vorsprung über einen dem Reibring zugeordneten Fußabschnitt umschließenden, aus Kernsand gebildeten Gießkerns an den Reibring unter Abdichtung eines freien Endabschnitts des Vorsprungs derart, daß dieser Endabschnitt nicht vom Sand des Gießkerns benetzt wird,
- Angießen des Trägerteils an den mit dem Gießkern versehenen Reibring unter Umgießen des freien Endabschnitts des Vorsprungs.

Gemäß der Erfindung wird, anders als beim Stand der Technik, im ersten Schritt entweder ein mit auf seiner Umfangsfläche ausgebildeten Vorsprüngen versehenes Trägerteil vorgefertigt oder es wird zunächst ein Reibring erzeugt, an dessen Innenumfangsfläche entsprechende Vorsprünge radial vorstehend ausgebildet sind. Indem dann an das jeweils vorgefertigte Element ein Gießkern angeformt wird, steht für den folgenden Arbeitsschritt des Angießens des jeweils anderen Teils ein Kernelement zur Verfügung, welches wie beim herkömmlichen Gießen mit Gießkernen in einer Sandgießform verwendet wird. Aufwendige zur Herstellung der für das Angießen benötigten Form erforderliche Werkzeuge oder Vorbereitungsschritte können so vermieden werden. Stattdessen bestimmt das jeweils vorgefertigte Element (Trägerteil oder Reibring) mit dem daran angeformten Kern selbst wesentlich die Endform, welche das jeweils angegossene Element erhält. Auf diese Weise können Bremsscheiben der in Rede stehenden Art auf kostengünstige Weise mit hoher Präzision und in großen Stückzahlen gefertigt werden.

Ein weiterer Vorteil der erfindungsgemäßen Vorgehensweise besteht darin, daß die Form der Vorsprünge problemlos an die sich im praktischen Einsatz ergebenden Belastungen angepaßt werden kann. Anders als beim Stand der Technik, bei dem der Werkstoff des jeweils angegossenen Elements in Taschen des jeweils vorgefertigten Elements fließt, können erforderlichenfalls komplexere Formelemente der Vorsprünge, wie enge Radien, Abrundungen oder Hinterschneidungen mit einer hohen Maßhaltigkeit im Zuge der Vorfertigung erzeugt werden. Dies kann beim Eingießen von Gießwerkstoff in taschenartige Ausnehmung des jeweils vorgefertigten Elements nicht bewerkstelligt werden.

Die Erfindung ermöglicht es somit, Bremsscheiben herzustellen, bei denen auf einfache Weise der Reibring und das Trägerteil so formschlüssig miteinander verbunden sind, daß der Ring sich bei Erwärmung in radialer Richtung frei ausdehnen kann. Auf diese Weise ist die Gefahr der Entstehung von Spannungsrissen im Reibring auf ein Minimum reduziert. Die so erreichte lange Lebensdauer erfindungsgemäß hergestellter Bremsscheiben macht es möglich, das Trägerteil als Nabe auszubilden, welche über ein wartungsfreies Lager direkt auf einer Achse gelagert ist. Da die Lebensdauer der Bremsscheibe mindestens gleich der des Lagers ist, ist bei einer solchen Anordnung eine Demontage der Scheibe während der Einsatzdauer des Lagers nicht erforderlich, so daß die beim Einbau des Lagers festgelegte optimale Position des Lagers trotz der unmittelbar mit ihm verbundenen Bremsscheibe nicht verändert werden muß.

Wesentlich ist bei der erfindungsgemäßen Vorgehensweise, daß beim "Anschießen" des Gießkerns an das jeweils vorgefertigte Element (Trägerteil oder Reibring) der anschließend mit dem jeweils anderen Element der Bremscheibe vergossene Endabschnitt so abgedichtet wird, daß er sicher von Kernsand frei gehalten wird. Nur auf diese Weise ist einerseits gewährleistet, daß sich der Reibring bei Erwärmung ungehindert in radialer Richtung ausdehnen kann, und andererseits sichergestellt, daß es zu keiner Korrosion und frühzeitigem abrasivem Verschleiß im Bereich der Verbindung zwischen Trägerteil und Reibring kommt.

Bei dem jeweils vorgefertigten Bauelement handelt es sich vorzugsweise ebenfalls um ein Gußteil. Da es beim Angießen von Gußwerkstoff an ein vorgefertigtes Gußteil zu keiner stoffschlüssigen Verbindung zwischen den Materialien kommt, kann so auf einfache Weise der möglichst reine Formschluß zwischen den miteinander verbundenen Teilen erzeugt werden.

Die Abdichtung des Vorsprungs kann dadurch erfolgen, daß vor dem Anformen des Gießkerns an den Vorsprung ein Dichtelement angesetzt wird, welches die Oberfläche des Endabschnitts gegenüber dem mit Kernsand des Gießkerns abschirmt. Dieses Dichtelement kann beispielsweise so an die Form des abzudichtenden Endabschnitts angepaßt sein, daß es in der Abdichtstellung den Vorsprung vollständig umgibt. Dabei ist das Dichtelement vorteilhafterweise geteilt ausgebildet, so daß es nach dem Aufschießen des Gießkerns auf einfache Weise entfernt werden kann. In diesem Zusammenhang ist es ebenso zweckmäßig, wenn das Dichtelement Bestandteil des Kernformwerkzeugs ist. Auf diese Weise können das Dichtelement bzw. seine Teile mit dem Öffnen der Form von dem Trägerteil abgenommen werden.

Vorzugsweise besteht das Dichtelement darüber hinaus aus einem elastischen Material. Insbesondere bei Verwendung eines solchen elastischen Materials ist es leicht möglich, die Abdichtung des freien Endabschnitts des Vorsprungs so durchzuführen, daß sie unter einer auf das Dichtelement wirkenden Druckkraft erfolgt. Durch das Aufbringen einer solchen Druckkraft wird die Sicherheit der Abdichtung des Endabschnitts verbessert.

Für einen besonders sicheren Halt zwischen dem Reibring und dem Trägerteil ist es günstig, wenn das Trägerteil regelmäßig um seinen Umfang verteilte und radial von ihm abstehende Vorsprünge aufweist. Aufgrund der größeren Zahl und der gleichmäßigen Anordnung der Vorsprünge können die beim Bremsvorgang entstehenden Kräfte einfacher vom Trägerteil aufgenommen werden. Gleiches gilt im Fall des Angießens eines Trägerteils an einen mit Vorsprüngen versehenen Reibring dann, wenn der Reibring regelmäßig über seine Innenfläche verteilte und radial von ihr vorstehende Vorsprünge aufweist.

Ein sauberer Abschluß eines sich nur über einen Teil der in Achsrichtung gemessenen Länge des Trägerteils erstreckenden Gießkerns läßt sich dadurch bewerkstelligen, daß das Anformen des Gießkerns unter Abdichtung des vom Sand des Gießkerns nicht zu benetzenden Abschnitts des Trägerteils erfolgt.

In Bezug auf das Werkzeug wird die oben genannte Aufgabe durch ein Kernformwerkzeug gelöst, welches mit einem Unterkasten und einem Oberkasten ausgestattet ist, wobei in der Schließstellung die zusammengesetzten Ober- und Unterkästen eine Hohlform für den zu formenden Gießkern umschließen. Erfindungsgemäß ist ein solches Kernformwerkzeug dadurch gekennzeichnet, daß in der Hohlform eine Aufnahme für ein einen von seiner Umfangsfläche radial vorstehenden Vorsprung aufweisendes Trägerteil einer Bremsscheibe ausgebildet ist, daß bei in der Hohlform sitzendem Trägerteil zwischen diesem und der äußeren Wand der Hohlform zumindest abschnittweise ein mit Sand ausfüllbarer Raum besteht, daß eine von der Hohlform abgehende Ausnehmung vorhanden ist, welche bei in der Hohlform sitzendem Trägerteil den freien Endabschnitt des Vorsprungs des Trägerteils aufnimmt, und daß im Bereich der Ausnehmung eine Dichtung angeordnet ist, welche in Schließstellung von Ober- und Unterkasten den in die Aufnahme ragenden Endabschnitt abdichtet gegenüber dem mit Formsand zu befüllenden Raum des Hohlraums. Mit einem solchen Formwerkzeug lassen sich kostengünstig und in großen Stückzahlen Gießkerne an vorgefertigte Bauteile von Bremsscheiben anformen, wobei sichergestellt ist, daß der für das anschließend erfolgende Gießen freizuhaltende Abschnitt des Vorsprungs vor einer Benetzung durch Kernsand geschützt ist.

Das Dichtelement kann dabei durch ein in die Aufnahme eingesetztes Einsatzstück gebildet sein, welches an die Form des Endabschnitts angepaßt ist und dieses vollständig abdeckt. Dabei ist die Teilungsebene zwischen Ober- und Unterkasten vorzugsweise so gelegt, daß die Ausnehmung mit ihrem einen Abschnitt in den Oberkasten und mit ihrem anderen Abschnitt in den Unterkasten eingeformt ist. Dies ist insbesondere dann günstig, wenn ein Dichtelement verwendet wird, das geteilt ist, wobei seine eine Hälfte in dem dem Oberkasten zugeordneten Abschnitt und seine andere Hälfte in dem dem Unterkasten zugeordneten Abschnitt der Aufnahme sitzt.

Eine saubere Eingrenzung der Längserstreckung des Gießkerns kann auf einfache Weise dadurch bewerkstelligt werden, daß eine tangential an den Umfang des Trägerteils anlegbare Dichtung vorhanden ist, welche einen Teilabschnitt des Hohlraums von dem mit Sand befüllbaren Raum abteilt.

Die im erfindungsgemäßen Werkzeug eingesetzten Dichtungen können auch von in Richtung der Hohlform bewegbaren Schiebelementen getragen werden. Dies gilt insbesondere für das tangential an den Umfang des Trägerteils anstellbare Dichtelement. Dabei können sowohl das zum Abdichten des Vorsprungs als auch das zum Abdichten eines Abschnitts des Trägerteils eingesetzten Dichtelemente schlauchförmig ausgebildet und mittels Innendruckbeaufschlagung expandierbar sein. Alternativ oder ergänzend können die jeweiligen Dichtelement durch von dem Ober- und / oder Unterkasten getragene Dichtlippen gebildet sein.

Eine für die praktische Anwendung des erfindungsgemäßen Formwerkzeugs besonders günstige Ausgestaltung ist dadurch gekennzeichnet, daß die Aufnahme als ein am Boden des Unter- oder Oberkastens angeformter Absatz ausgebildet ist, welcher bei auf ihm sitzenden Trägerteil dieses in der Hohlform zentriert. Auf diese Weise ist der mit dem Ausrichten des vorgefertigten Teils im Formkasten verbundene Aufwand auf ein Minimum reduziert.

Nachfolgend wird die Erfindung anhand einer ein Ausführungsbeispiel darstellenden Zeichnung näher erläutert. Es zeigen schematisch:
- Fig. 1a: einen Ausschnitt eines Kernformwerkzeugs in einer ersten Betriebsstellung in einem Längsschnitt,
- Fig. 1b: das Kernformwerkzeug in einer zweiten Betriebsstellung in einer der Fig. 1 entsprechenden Ansicht,

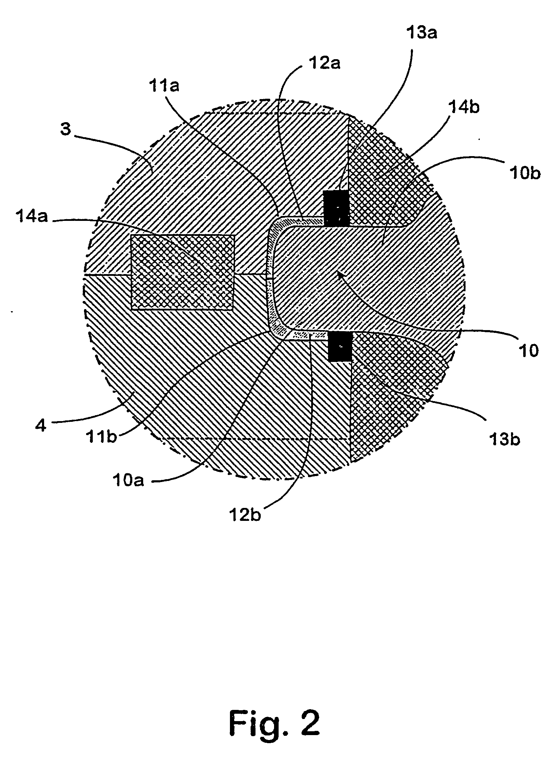

- Fig. 2: einen Ausschnitt "A" der Fig. 1b in vergrößerter Darstellung,

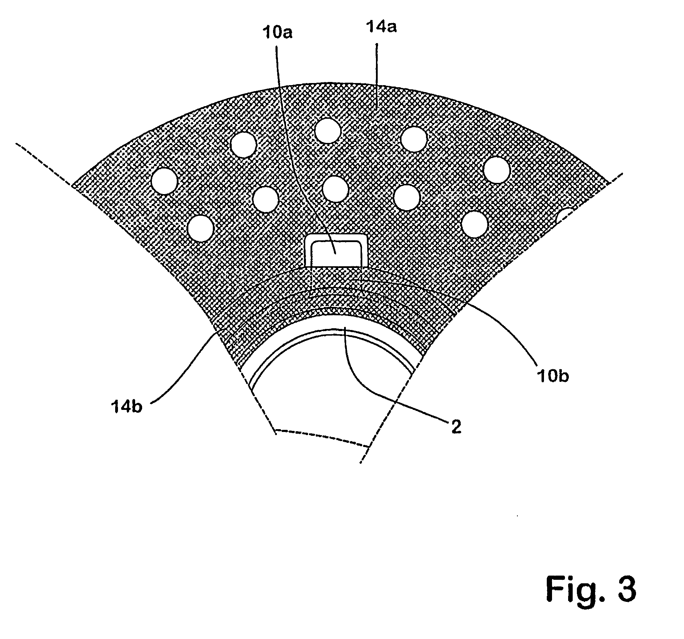

- Fig. 3: einen Ausschnitt eines Trägerteils mit angeformtem Gießkern in einer Ansicht von oben,
- Fig. 4a-4d: das Trägerteil bei den im Zuge der Herstellung der Bremsscheibe durchlaufenen Arbeitsschritte in jeweils seitlicher Ansicht,

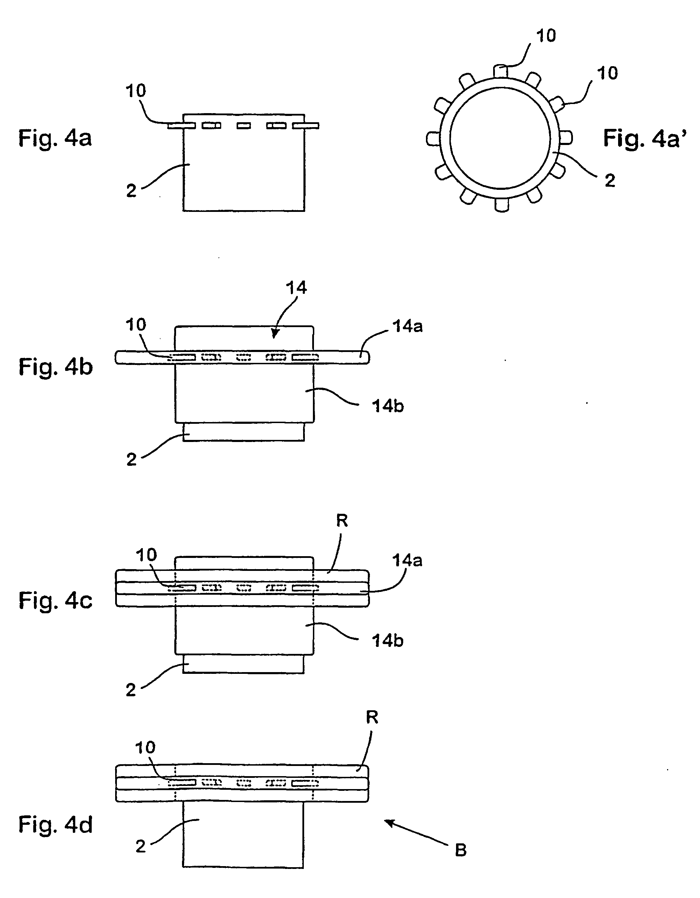

- Fig. 4a': das Trägerteil in einer Ansicht von oben.

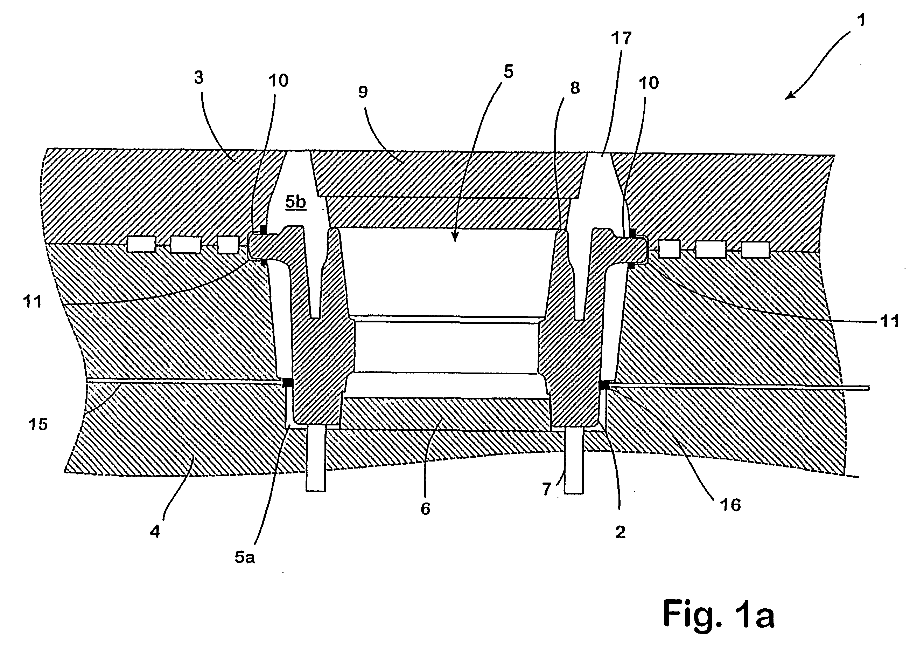

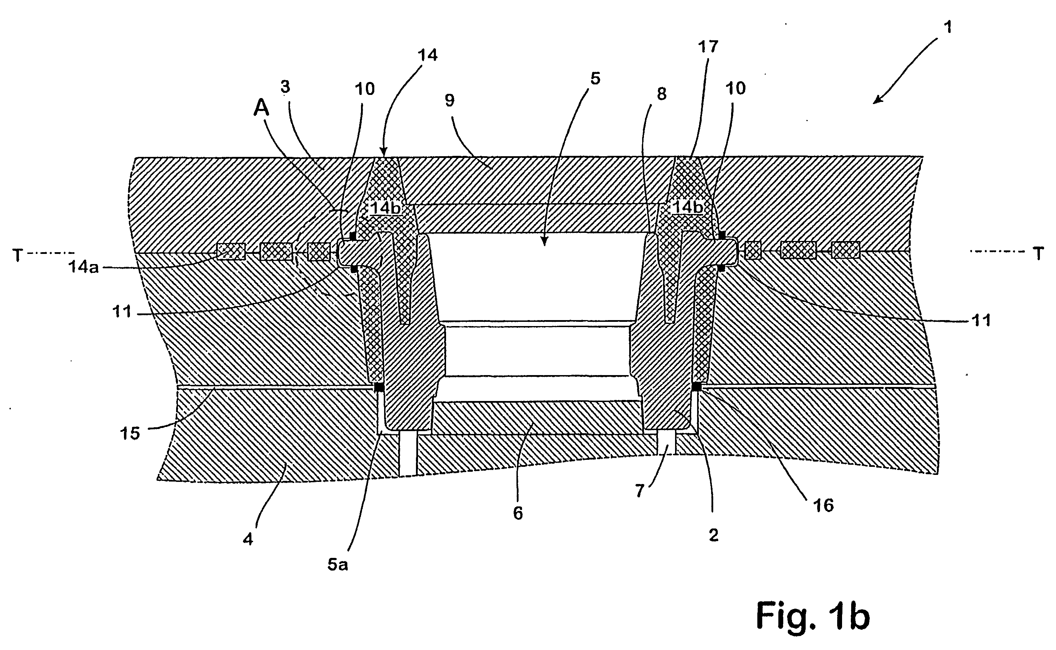

In das in Fig. 1 in geschlossener Stellung dargestellte Kernformwerkzeug 1 ist ein vorgefertigtes Trägerteil 2 eingesetzt, welches die Nabe oder den Topf einer herzustellenden Bremsscheibe bildet.

Dabei weist das Kernformwerkzeug einen Oberkasten 3 und einen Unterkasten 4 auf, welche gemeinsam einen Hohlraum 5 umschließen. Am durch eine Wand des Unterkastens 4 gebildeten Boden des Hohlraums 5 ist zentral eine Aufnahme 6 in Form eines kegelstumpfförmigen Absatzes ausgebildet, auf den das Trägerteil 2 aufgesteckt ist. Der Außendurchmesser und die Form der Aufnahme 6 sind an den Innendurchmesser und die Form des Innenbereichs des Trägerteils 2 angepaßt, in den die Aufnahme 6 greift. Auf diese Weise ist das Trägerteil 2 durch die Aufnahme 6 in dem Hohlraum 5 zentriert.

Mit seinem dem Boden des Unterkastens zugeordneten Rand sitzt das Trägerteil 2 auf Ausstoßern 7, die in regelmäßigen Abständen um die Aufnahme 6 herum angeordnet sind. Auf dem dem Oberkasten 3 zugeordneten stirnseitigen Rand 8 des Trägerteils 2 liegt zudem ein sich ausgehend von dem Rand kegelförmig erweiternder Deckel 9, so daß der Innenraum des Trägerteils 2 vollständig gegenüber seiner Umgebung abgeschlossen ist.

An die im wesentlichen zylindrische Außenwand des Trägerteils sind nahe des oberen Randes 8 in regelmäßigen Winkelabständen über den Umfang verteilt Vorsprünge 10 ausgeformt. Jeder der Vorsprünge 10 greift in eine Ausnehmung 11, die ausgehend vom Hohlraum 5 und der Teilungsebene T zwischen dem Oberkasten 3 und dem Unterkasten 4 mit ihrem oberen Abschnitt 11a in den Oberkasten 3 und mit ihrem unteren Abschnitt 11b in den Unterkasten 4 eingeformt ist. In den oberen Abschnitt 11a und den unteren Abschnitt 11b der Ausnehmungen 11 ist jeweils ein Dichtelement 12a,12b eingesetzt, dessen dem jeweiligen Vorsprung 10 zugeordnete Fläche an die Form des betreffenden Vorsprungs 10 angepaßt ist. An ihrem dem Hohlraum 5 zugeordneten Ende tragen die Dichtelemente 12a,12b zusätzlich einen im Querschnitt ringförmigen Wulst 13a,13b, der jeweils dicht an den ihm zugeordneten Flächen des jeweiligen Vorsprungs 10 anliegt.

Die Dichtelemente 12a,12b und ihr Wulst 13a bzw. 13b bestehen aus einem elastischen Material. Ihre Wandstärke ist in Bezug auf die Form der Ausnehmungen 11 und des bei in die Ausnehmungen 11 eingreifenden Vorsprüngen 10 in diesen verbleibenden Raums so überdimensioniert, daß die Dichtelemente 12a,12b und besonders ihr jeweiliger Wulst 13a,13b in Schließstellung des Kernformwerkzeugs 1 unter Druck gegen den jeweiligen Vorsprung 10 gepreßt werden. Auf diese Weise ist der dem Trägerteil 2 zugeordnete Fußabschnitt 10b sicher gegenüber dem sich bis zum Ende der Vorsprünge 10 erstreckenden freien Endabschnitt 10a abgedichtet.

Alternativ zur Verwendung von elastischen Dichtelementen 12a,12b können im Bereich des Übergangs zwischen den Ausnehmungen 11 zum Hohlraum 5 hier nicht dargestellte Dichtlippen vorgesehen werden. Dabei können beispielsweise die dem Unterkasten zugeordneten Dichtelemente an horizontal oder vertikal bewegbaren Schiebern befestigt sein. Ebenso können hier ebenfalls nicht dargestellte, schlauchartige und bei Beaufschlagung mit Innendruck sich ausdehnende Dichtelemente zum Abdichten des jeweiligen Endabschnitts 10b gegenüber dem zugehörigen Fußabschnitt 10a eingesetzt werden.

Ausgehend von der Teilungsebene T und vom Hohlraum 5 ist zudem in den Oberkasten 3 der obere Teil einer Form für den ringscheibenartigen, normal zur Längsachse des Trägerelements 2 angeordneten Teil 14a des an das Trägerelement 2 anzuformenden Gießkerns 14 ausgebildet.

Der untere Teil der Form ist in entsprechender Weise in den Unterkasten 4 eingeformt. Durch den scheibenförmigen Teil des Gießkerns 14 werden beim Angießen des Reibrings an das Trägerteil 2 die Lüfterkanäle des Reibrings gebildet.

Durch eine an einem Schieber 15 befestigte und gegen die Umfangsfläche des Trägerteils 2 gedrückte Dichtung 16 ist ein dem Boden des Unterkastens 4 zugeordneter Bereich 5a des Hohlraums 5 gegenüber dem Bereich 5b des Hohlraums 5 abgedichtet, in dem der Ringteil 14b des Gießkerns 14 geformt wird. Über Öffnungen 17 des Oberkastens 3 kann Kernsand in den Bereich 5b des Hohlraums 5 und die damit verbundene Form für den ringscheibenartigen Teil 14a eingeschossen werden.

Zur Herstellung einer Bremsscheibe B wird zunächst in einer nicht dargestellten Grünsand-Gießform das Trägerteil 2 mit den daran angeformten, fingerartig in radialer Richtung abstehenden Vorsprüngen 10 gegossen (Fig. 4a). Anschließend wird das vorgefertigte Trägerteil 2 in die Kernformvorrichtung 1 eingesetzt (Fig. 1a) und der Gießkern 14 durch Einschießen von Formsand in die befüllbaren Bereiche der Hohlform 5 der Kernformvorrichtung 1 an das Trägerteil angeformt (Fig. 1b, Fig. 4b). Dabei ist durch die Dichtelemente 12a,12b bzw. den jeweiligen Wulst 13a,13b sichergestellt, daß die Endabschnitte 10a der Vorsprünge 10 frei von Formsand bleiben. Mit dem Öffnen des Kernformwerkzeugs 1 werden die mit dem Ober- bzw. Unterkasten verbundenen Dichtelemente 12a,12b mit den jeweiligen Wulsten 13a,13b von den Endabschnitten 10a der Vorsprünge 10 abgehoben, so daß diese für das Angießen des Reibrings R frei liegen.

Anschließend wird das Trägerteil 2 mit dem daran angeschossenen Gießkern 14 in eine hier nicht dargestellte Grünsand-Gießform gesetzt und der Reibring R an das Trägerteil 2 gegossen. In der Gießform muß dazu lediglich die Hohlform für den Reibring und der Sitz für das Trägerteil 2 mit dem Gießkern 14 ausgebildet sein.

Beim Abgießen des Reibrings R umfließt der Gußwerkstoff die freien, von Sand nicht bedeckten Endabschnitte 10b der Vorsprünge 10, ohne sich stoffschlüssig mit dem Gußwerkstoff des Trägerteiles 2 zu verbinden. Auf diese Weise greifen nach dem Erstarren des Reibrings R die Vorsprünge 10 des Trägerteils 2 in exakt ihrer Form angepaßte Taschen des Reibrings R, so daß eine sichere, die radiale Ausdehnung ermöglichende formschlüssige Verbindung zwischen Reibring R und Trägerteil 2 gebildet ist (Fig. 4c). Nach dem Erstarren der Reibscheibe R und dem Entfernen des Gießkerns 14 ist die Bremsscheibe B fertig.

### BEZUGSZEICHEN

- 1: Kernformwerkzeug
- 2: Trägerteil
- 3: Oberkasten
- 4: Unterkasten
- 5: Hohlraum
- 5a: dem Boden des Unterkastens 4 zugeordneter Bereich des Hohlraums 5
- 5b: Bereich des Hohlraums 5, in dem der Ringteil 14b des Gießkerns 14 geformt wird
- 6: Aufnahme
- 7: Ausstoßer
- 8: Rand des Trägerteils 2
- 9: Deckel
- 10: Vorsprünge
- 10a: Endabschnitt der Vorsprünge
- 10b: Fußabschnitt der Vorsprünge
- 11: Ausnehmung
- 11a: oberer Abschnitt der Ausnehmung 11
- 11b: unterer Abschnitt der Ausnehmung 11
- 12a,12b: Dichtelemente
- 13a,13b: Wulst
- 14: Gießkern
- 14a: scheibenförmiger Teil des Gießkerns 14
- 14b: Ringteil des Gießkerns 14
- 15: Schieber
- 16: Dichtung
- 17: Öffnungen des Oberkastens 3
- B: Bremsscheibe
- R: Reibscheibe
- T: Teilungsebene

## Patentansprüche

1. Verfahren zum Herstellen einer ein Trägerteil (2) und einen Reibring (R) aufweisenden Bremsscheibe (B) umfassend die folgenden Arbeitsschritte:
- Erzeugen, insbesondere durch Gießen, des Trägerteils (2) mit mindestens einem auf seinem Umfang angeordneten, radial abstehenden Vorsprung (10),
- Anformen eines den Vorsprung (10) über einen dem Trägerteil (2) zugeordneten Fußabschnitt (10a) umschließenden, aus Kernsand gebildeten Gießkerns (14) an das Trägerteil (2) unter Abdichtung eines freien Endabschnitts (10a) des Vorsprungs (10) derart, daß dieser Endabschnitt (10a) nicht vom Sand des Gießkerns (14) benetzt wird,
- Angießen des Reibrings (R) an das mit dem Gießkern (14) versehenen Trägerteil (2) unter Umgießen des freien Endabschnitts (10a) des Vorsprungs (10).

2. Verfahren zum Herstellen einer ein Trägerteil (2) und einen Reibring (R) aufweisenden Bremsscheibe (B) umfassend die folgenden Arbeitsschritte:
- Erzeugen, insbesondere Gießen, des Reibrings mit mindestens einem auf seiner Innenfläche angeordneten, radial vorstehenden Vorsprung,
- Anformen eines den Vorsprung über einen dem Reibring zugeordneten Fußabschnitt umschließenden, aus Kernsand gebildeten Gießkerns an den Reibring unter Abdichtung eines freien Endabschnitts des Vorsprungs derart, daß dieser Endabschnitt nicht vom Sand des Gießkerns benetzt wird,
- Angießen des Trägerteils an den mit dem Gießkern versehenen Reibring unter Umgießen des freien Endabschnitts des Vorsprungs.

3. Verfahren nach Anspruch 1 oder 2, **dadurch gekennzeichnet, daß** vor dem Anformen des Gießkerns (14) an den Vorsprung (10) ein Dichtelement (12a,12b) angesetzt wird, welches die Oberfläche des Endabschnitts (10a) gegenüber dem Kernsand des Gießkerns (14) abschirmt.

4. Verfahren nach Anspruch 3, **dadurch gekennzeichnet, daß** das Dichtelement (12a,12b) in der Abdichtstellung den Endabschnitt (10a) des Vorsprungs (10) vollständig umgibt.

5. Verfahren nach einem der Ansprüche 3 oder 4, **dadurch gekennzeichnet, daß** das Dichtelement (12a,12b) aus einem elastischen Material besteht.

6. Verfahren nach einem Ansprüche 3 bis 5, **dadurch gekennzeichnet, daß** die Abdichtung des freien Endabschnitts (10a) des Vorsprungs (10) unter einer auf das Dichtelement (12a,12b) wirkenden Druckkraft erfolgt.

7. Verfahren nach Anspruch 1, **dadurch gekennzeichnet, daß** das Trägerteil (2) regelmäßig um seinen Umfang verteilte und radial von ihm abstehende Vorsprünge (10) aufweist.

8. Verfahren nach Anspruch 2, **dadurch gekennzeichnet, daß** der Reibring (R) regelmäßig über seine Innenfläche verteilte und radial von dieser vorstehende Vorsprünge aufweist.

9. Verfahren nach einem der voranstehenden Ansprüche, **dadurch gekennzeichnet, daß** der Gießkern (14) sich nur über einen Teil der in Achsrichtung gemessenen Länge des Trägerteils (2) erstreckt und d a ß das Anformen des Gießkerns (14) unter Abdichtung des vom Sand des Gießkerns (14) nicht zu benetzenden Abschnitts des Trägerteils (2) erfolgt.

10. Kernformwerkzeug mit einem Unterkasten (4) und einem Oberkasten (3), wobei in der Schließstellung die zusammengesetzten Ober- (3) und Unterkästen (4) eine Hohlform (5) für den zu formenden Gießkern (14) umschließen, dadurch **dadurch gekennzeichnet,**
- **daß** in der Hohlform (5) eine Aufnahme (6) für ein einen von seiner Umfangsfläche radial vorstehenden Vorsprung (10) aufweisendes Trägerteil (2) einer Bremsscheibe (B) ausgebildet ist,
- **daß** bei in der Hohlform sitzendem Trägerteil (2) zwischen diesem und der äußeren Wand der Hohlform (5) zumindest abschnittweise ein mit Sand ausfüllbarer Raum (5b) besteht,
- **daß** eine von der Hohlform (5) abgehende Ausnehmung (11) vorhanden ist, welche bei in der Hohlform (5) sitzendem Trägerteil (2) den freien Endabschnitt (10a) des Vorsprungs (10) des Trägerteils (2) aufnimmt, und
- **daß** im Bereich der Ausnehmung (11) eine Dichtung angeordnet ist, welche in Schließstellung des Kernformwerkzeugs (1) den in die Aufnahme (11) ragenden Endabschnitt (10a) abdichtet gegenüber dem mit Kernsand zu befüllenden Raum (5b) des Hohlraums (5).

11. Kernformwerkzeug nach Anspruch 10, **dadurch gekennzeichnet, daß** das Dichtelement (12a,12b) durch ein in die Aufnahme (11) eingesetztes Einsatzstück gebildet ist, welches an die Form des Endabschnitts (10a) angepaßt ist und dieses vollständig abdeckt.

12. Kernformwerkzeug nach einem der Ansprüche 10 oder 11, **dadurch gekennzeichnet, daß** die Ausnehmung (11) mit ihrem oberen Abschnitt (11a) in den Oberkasten (3) und mit ihrem unteren Abschnitt (11b) in den Unterkasten (4) eingeformt ist.

13. Kernformwerkzeug nach einem der Ansprüche 10 bis 12, **dadurch gekennzeichnet, daß** eine tangential an den Umfang des Trägerteils (2) anlegbare Dichtung (16) vorhanden ist, welche einen Abschnitt (5a) des Hohlraums (5) von dessen mit Sand befüllbaren Raumabschnitt (5b) abteilt.

14. Kernformwerkzeug nach einem der Ansprüche 10 bis 13, **dadurch gekennzeichnet, daß** die Dichtung (16) von in Richtung der Hohlform (5) bewegbaren Schiebelementen (15) getragen sind.

15. Kernformwerkzeug nach einem der Ansprüche 10 bis 14, **dadurch gekennzeichnet, daß** das Dichtelement (16) schlauchförmig ausgebildet und mittels Innendruckbeaufschlagung expandierbar ist.

16. Kernformwerkzeug nach einem der Ansprüche 10 bis 15, **dadurch gekennzeichnet, daß** das Dichtelement (12a,12b) durch von dem Ober- und /oder Unterkasten getragene Dichtlippen gebildet ist.

17. Kernformwerkzeug nach einem der Ansprüche 10 bis 16, **dadurch gekennzeichnet, daß** die Aufnahme (6) als ein am Boden des Unterkastens (4) angeformter Absatz ausgebildet ist, welcher bei auf ihm sitzenden Trägerteil (2) dieses in der Hohlform (5) zentriert.

## Claims

1. A method for manufacturing a brake disk (B) with a carrier part (2) and a friction ring (R), comprising the following production steps:
- producing the carrier part (2) with at least one radially protruding projection (10) arranged on its circumference, in particular, by means of casting,
- moulding a casting core (14) that consists of core sand and surrounds the projection (10) over a base section (10a) assigned to the carrier part (2) onto the carrier part (2) while sealing a free end section (10a) of the projection (10) in such a way that this end section (10a) is not wetted by the sand of the casting core (14),
- casting the friction ring (R) onto the carrier part (2) provided with the casting core (14) while casting-in the free end section (10a) of the projection (10).

2. A method for manufacturing a brake disk (B) with a carrier part (2) and a friction ring (R), comprising the following production steps:
- producing the friction ring with at least one radially protruding projection arranged on its inner surface, in particular, by means of casting,
- moulding a casting core that consists of core sand and surrounds the projection over a base section assigned to the friction ring onto the friction ring while sealing a free end section of the projection in such a way that this end section is not wetted by the sand of the casting core,
- casting the carrier part onto the friction ring with the casting core provided while casting-in the free end section of the projection.

3. The method according to Claim 1 or 2, **characterized in that** a sealing element (12a, 12b) is attached to the projection (10) before the casting core (14) is moulded on, wherein said sealing element shields the surface of the end section (10a) from the core sand of the casting core (14).

4. The method according to Claim 3, **characterized in that** the sealing element (12a, 12b) completely surrounds the end section (10a) of the projection (10) in the sealing position.

5. The method according to one of Claim 3 or 4, **characterized in that** the sealing element (12a, 12b) consists of an elastic material.

6. The method according to one of Claims 3 to 5, **characterized in that** the free end section (10a) of the projection (10) is sealed under the influence of a compressive force that acts upon the sealing element (12a, 12b).

7. The method according to Claim 1, **characterized in that** the carrier part (2) is provided with projections (10) radially protruding from it circumference, which are uniformly distributed over its circumference.

8. The method according to Claim 2, **characterized in that** the friction ring (R) is provided with projections radially protruding from its inner surface, which are uniformly distributed over its inner surface.

9. The method according to one of the preceding claims, **characterized in that** the casting core (14) only extends over part of the axially measured length of the carrier part (2), and **in that** the casting core (14) is moulded on while sealing the section of the carrier part (2) not to be wetted by the sand of the casting core (14).

10. A core moulding tool with a bottom box (4) and a top box (3), wherein, in the closed position the attached top box (3) and bottom box (4) surround a hollow mould (5) for the casting core (14) to be moulded, **characterized**
- **in that** the hollow mould (5) contains a receptacle (6) for a carrier part (2) of a brake disk (B) which contains a projection (10) that radially protrudes from its circumferential surface,
- **in that** a space (5b) that can be filled with sand is at least sectionally formed between the carrier part (2) and the outer wall of the hollow mould (5) when the carrier part (2) is seated in the hollow mould,
- **in that** a recess (11) is provided which originates from the hollow mould (5) and receives the free end section (10a) of the projection (10) of the carrier part (2) when the carrier part (2) is seated in the hollow mould (5), and
- **in that** a seal is arranged in the region of the recess (11) which seals the end section (10a) protruding_into the receptacle (11) relative to the space (5b) of the hollow space (5) which is to be filled with core sand in the closed position of the core moulding tool (1).

11. The core moulding tool according to Claim 10, **characterized in that** the sealing element (12a, 12b) is formed by an insert that is inserted into the receptacle (11), wherein said insert is adapted to the shape of and completely covers the end section (10a).

12. The core moulding tool according to one of Claims 10 or 11, **characterized in that** the recess (11) is realized such that its upper section (11a) is arranged in the top box (3) and its lower section (11b) is arranged in the bottom box (4).

13. The core moulding tool according to one of Claims 10 to 12, **characterized in that** a seal (16) is provided which can be tangentially placed against the circumference of the carrier part (2) and separates a section (5a) of the hollow space (5) from its section (5b) that can be filled with sand.

14. The core moulding tool according to one of Claims 10 to 13, **characterized in that** the seal (16) is carried by slide elements (15) that can be moved in the direction of the hollow mould (5).

15. The core moulding tool according to one of Claims 10 to 14, **characterized in that** the sealing element (16) has a tubular shape and can be expanded by applying pressure to its interior.

16. The core moulding tool according to one of Claims 10 to 15, **characterized in that** the sealing element (12a, 12b) is formed by sealing lips that are carried by the top box and/or the bottom box.

17. The core moulding tool according to one of Claims 10 to 16, **characterized in that** the receptacle (6) is realized in the form of a shoulder that is integrally formed onto the bottom of the bottom box (4) and centers the carrier part (2) in the hollow mould (5) when it is seated thereon.

## Revendications

1. Procédé de préparation d'un frein à disque (B) présentant une partie support (2) et un anneau de friction (R), comprenant les étapes suivantes :
- production, en particulier par coulée, de la partie support (2) avec au moins une saillie (10) radiale, disposée sur sa circonférence,
- moulage d'un noyau de coulée (14) formé dans le sable à noyaux, entourant la saillie (10) par un pied (10a) affecté à la partie support (2), sur la partie support (2) avec étanchéification d'une section terminale libre (10a) de la saillie (10), de sorte que cette section terminale (10a) ne mouille pas le sable à noyaux de coulée,
- jonction par la fonte de l'anneau de friction (R) sur la partie support (2) munie du noyau de coulée (14) en entourant la section terminale libre (10a) de la saillie (10).

2. Procédé de préparation d'un frein à disque (B) présentant une partie support (2) et un anneau de friction (R), comprenant les étapes suivantes :
- production, en particulier par coulée, de l'anneau de friction avec au moins une saillie radiale, disposée sur sa surface interne,
- moulage d'un noyau de coulée formé dans le sable à noyaux, entourant la saillie par un pied affecté à l'anneau de friction, sur l'anneau de friction avec étanchéification d'une section terminale libre de la saillie, de sorte que cette section terminale ne mouille pas le sable à noyaux de coulée,
- jonction par la fonte de la partie support sur l'anneau de friction muni du noyau de coulée en entourant la section terminale libre de la saillie.

3. Procédé selon la revendication 1 ou 2, **caractérisé en ce qu'**avant le moulage du noyau de coulée (14), on dispose sur la saillie (10), un élément étanche (12a, 12b), qui protège la surface de la section terminale (10a) du sable à noyaux de noyau de coulée (14).

4. Procédé selon la revendication 3, **caractérisé en ce que** l'élément étanche (12a, 12b) entoure complètement la section terminale (10a) de la saillie (10) en position étanche.

5. Procédé selon la revendication 3 ou 4, **caractérisé en ce que** l'élément étanche (12a, 12b) consiste en un matériau élastique.

6. Procédé selon l'une des revendications 3 à 5, caractérisé en ce l'étanchéité de la section terminale libre (10a) de la saillie (10) est réalisée par une force de pression agissant sur l'élément étanche (12a, 12b).

7. Procédé selon la revendication 1, **caractérisé en ce que** la partie support (2) présente régulièrement, des saillies (10) distribuées sur sa circonférence et radiales.

8. Procédé selon la revendication 2, **caractérisé en ce que** l'anneau de friction (R) présente régulièrement, des saillies (10) distribuées sur sa circonférence et radiales.

9. Procédé selon l'une des revendications précédentes, **caractérisé en ce que** le noyau de coulée (14) s'étend sur seulement une partie de la longueur mesurée en direction axiale de la partie support (2) et **en ce que** le moulage du noyau de coulée (14) est réalisé avec étanchéification de la section ne mouillant pas le sable du noyau de coulée (14), de la partie support (2).

10. Outil à noyauter avec une boîte inférieure (4) et une boîte supérieure (3), où en position de fermeture, les boites supérieure (3) et inférieure (4) rassemblées constituent un modèle creux (5) pour le noyau de coulée (14) à former, **caractérisé en ce que**
- dans le modèle creux (5), est formée un logement (6) pour une partie support (2) d'un frein à disque (B°, présentant une saillie (10) radiale sur sa circonférence,
- lorsque la partie support (2) est dans le modèle creux, il existe entre celle-ci et le modèle creux (5), au moins par segment, un espace (5b) pouvant recevoir du sable,
- est présent un creux (11) se détachant du modèle creux (5), qui lorsque la partie support (2) est dans le modèle creux, accueille la section terminale libre (10a) de la saillie (10) de la partie support (2), et
- dans la zone du creux (11), est disposé un joint, qui en position de fermeture de l'outil à noyauter (1), rend étanche la section terminale (10a) située dans le creux (11) par rapport à l'espace (5a) pouvant être rempli de sable à noyaux du modèle creux (5).

11. Outil à noyauter selon la revendication 10, **caractérisé en ce que** l'élément étanche (12a, 12b) est formé par un insert introduit dans le creux (11); qui est ajusté à la forme de la section terminale (10a) et couvre complètement celle-ci.

12. Outil à noyauter selon l'une des revendications 10 ou 11, **caractérisé en ce que** le creux (11) est introduit avec sa section supérieure (11a) dans la boîte supérieure (3) et avec sa section inférieure (11b) dans la boîte inférieure (4).

13. Outil à noyauter selon l'une des revendications 10 à 12, **caractérisé en ce qu'**est prévu un joint (16) disposé tangentiellement sur la circonférence de la partie support (2), qui sépare une section (5a) du modèle creux (5) de la section vide (5b)pouvant être remplie de sable.

14. Outil à noyauter selon l'une des revendications 10 à 13, **caractérisé en ce que** les joints (16) sont portés par des éléments glissants (15) déplaçables en direction du modèle creux (5).

15. Outil à noyauter selon l'une des revendications 10 à 14, **caractérisé en ce que** l'élément étanche (16) est formé de manière tubulaire et peut être étiré à l'aide d'un dispositif de pression interne.

16. Outil à noyauter selon l'une des revendications 10 à 15, **caractérisé en ce que** l'élément étanche (12a, 12b) est formé par les lèvres étanches portées sur les boîtes supérieure et inférieure.

17. Outil à noyauter selon l'une des revendications 10 à 16, **caractérisé en ce que** le logement (6) est réalisé comme un talon formé sur le fond de la boîte inférieure (4), qui centre la partie support (2) dans le modèle creux (5).
